# FASCICULE DE BREVET EUROPEEN

(11) **EP 3 084 249 B1**
(45) Date de publication et mention de la délivrance du brevet: **03.01.2018**
(21) Numéro de dépôt: 14812585.9
(22) Date de dépôt: 18.11.2014
(51) Int. Cl.: F16D 23/06

(54) **BUTEE D'ARRET POUR MANCHON DE BOITE DE VITESSES COMPORTANT DES ECHANCRURES DE LUBRIFICATION DES SYNCHRONISEURS**
ANSCHLAG FÜR EINE SCHALTGETRIEBEMUFFE MIT VERTIEFUNGEN ZUR SCHMIERUNG DER SYNCHRONISATOREN
STOP FOR A GEARBOX SLEEVE COMPRISING INDENTATIONS FOR LUBRICATING THE SYNCHRONISERS

(30) Priorité: 18.12.2013 FR 1362904
(43) Date de publication de la demande: 26.10.2016
(73) Titulaire: Technoboost, 75116 Paris (FR)
(72) Inventeur: WASCHEUL, Michael, F-78260 Acheres (FR); RENAULT, Aurelien, F-78320 Levis St Nom (FR); GIANNONI, Marc, F-75009 Paris (FR)
(74) Mandataire: Rosenberg, Muriel Sylvie
(86) Numéro de dépôt international: PCT/FR2014/052945
(87) Numéro de publication internationale: WO 2015/092182

(56) Documents cités:
- DE-A1-102010 023 980
- DE-B3-102012 213 999
- FR-A1- 2 983 929

## Description

La présente invention concerne un ensemble comportant un manchon de synchronisation équipé d'une butée d'arrêt pour une boîte de vitesses, ainsi qu'une boîte de vitesses disposant d'un tel ensemble, et un véhicule automobile comportant cette boîte de vitesses.

Les boîtes de vitesses manuelles comportent des pignons libres portés par des arbres, qui peuvent être liés à leurs arbres pour engager un des rapports, par le coulissement axial d'un manchon de synchronisation commandé par une fourchette engagée dans une rainure circulaire extérieure de ce manchon.

Un type de manchon de synchronisation, voir FR2983929, comporte des cannelures intérieures restant solidaires de cannelures correspondantes du pignon libre, son coulissement appliquant d'abord une poussée axiale sur des cônes de synchronisation qui ajustent la vitesse de ce pignon par frottement. Une fois la vitesse synchronisée, le dispositif de synchronisation permet la course finale du manchon qui engage ses cannelures intérieures sur des cannelures correspondantes liées à l'arbre.

On réalise ainsi en douceur une liaison du pignon libre avec l'arbre, donnant un des rapports de la boîte de vitesses.

Ces boîtes de vitesses utilisent généralement un procédé de lubrification des éléments tournants sur l'arbre comprenant l'alimentation en huile d'un perçage central de l'arbre par une de ses extrémités, cette huile étant ensuite redistribuée par centrifugation au travers de perçages radiaux vers ces éléments afin de diminuer les frottements et d'éviter les grippages.

En particulier il faut prévoir une lubrification suffisante des systèmes de synchronisation comprenant les cônes qui subissent des frottements avec une certaine pression pour obtenir le couple de synchronisation, afin d'éviter un échauffement et une usure anormale.

Pour mettre en oeuvre ce procédé, une solution connue comporte une pompe de gavage externe ou interne à la boîte de vitesses, qui alimente sous pression le perçage central de l'arbre afin d'assurer en permanence l'alimentation des perçages radiaux. Cette solution nécessite des équipements complémentaires comme une pompe électrique ou mécanique, qui consomment une certaine énergie et ajoutent des coûts.

Une autre solution connue, présentée notamment par le document JP-A-2002054729, comporte une goulotte disposée dans le carter, qui reçoit les projections d'huile venant du barbotage de ces pignons réalisant une remontée de l'huile, pour ensuite la conduire par gravité vers l'extrémité axiale de l'arbre afin de l'introduire dans son perçage central.

Un problème qui se pose avec cette solution est que lors du démarrage du véhicule, en particulier par temps froid donnant une huile plus épaisse, il faut un certain temps de rotation de la boîte de vitesses pour obtenir le cheminement complet et le début de la lubrification des cônes de synchronisation.

Par ailleurs certaines boîtes de vitesses comportent une tôle qui est disposée transversalement pour former une butée de fin de course du manchon de synchronisation. En particulier cette tôle peut présenter un contour extérieur circulaire couvrant la face transversale du manchon quand il est en appui dessus, afin de former la butée, ce qui empêche dans cette position un passage d'huile direct par ce côté vers le dispositif de synchronisation contenu à l'intérieur du manchon.

Dans certaines conditions de fonctionnement où l'arrivée d'huile venant de l'arbre est insuffisante, on peut obtenir des problèmes de lubrification du dispositif de synchronisation.

La présente invention a notamment pour but d'éviter ces inconvénients de la technique antérieure.

Elle propose à cet effet un ensemble comportant un manchon de synchronisation équipé d'une butée d'arrêt pour une boîte de vitesses, ce manchon comprenant un alésage présentant des cannelures prévues pour lier un pignon libre à son arbre, en actionnant un dispositif de synchronisation contenu radialement à l'intérieur de cet alésage, la butée d'arrêt maintenue axialement présentant une face plane transversale disposant d'un contour extérieur dépassant de l'alésage afin de recevoir l'appui de la face transversale du manchon pour l'arrêter en fin de course, caractérisé en ce que le contour extérieur de la butée d'arrêt comporte des échancrures qui viennent radialement en dessous de l'alésage.

Un avantage de cet ensemble est que de manière économique avec peu de modifications, en réalisant des échancrures dans le contour extérieur de la butée d'arrêt, on permet quand le manchon est en appui sur cette butée un passage d'huile latéral pour des projections qui peuvent rentrer directement dans cet alésage afin de lubrifier le dispositif de synchronisation interne.

L'ensemble pour boîte de vitesses selon l'invention peut de plus comporter une ou plusieurs des caractéristiques suivantes, qui peuvent être combinées entre elles.

Avantageusement, le contour extérieur de la butée d'arrêt s'inscrit dans un cercle.

En particulier, les échancrures peuvent être formées par des découpes droites.

Dans ces derniers cas, le contour extérieur de la butée d'arrêt forme avantageusement un carré disposant de quatre angles arrondis inscrits dans le cercle.

Avantageusement, la butée d'arrêt est formée dans une tôle.

L'invention a aussi pour objet un procédé de réalisation d'une butée d'arrêt formée dans une tôle, qui comporte la découpe et l'emboutissage d'une bande de tôle sur une presse pour réaliser cette butée.

L'invention a aussi pour objet une boîte de vitesses disposant de pignons libres pouvant être liés à leurs arbres par le coulissement de manchons de synchronisation, qui comporte un ensemble comprenant l'une quelconque des caractéristiques précédentes.

En particulier, la butée d'arrêt peut être liée à un pignon fixe de la boîte de vitesses.

L'invention a de plus pour objet un véhicule automobile comportant une boîte de vitesses reliée à un moteur thermique pour entraîner les roues motrices, qui comporte un ensemble comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est une vue arrière présentant un ensemble selon l'invention ;
- la figure 2 est une vue avant présentant cet ensemble avec sa fourchette de commande ;
- la figure 3 est une vue en coupe axiale d'un arbre de la boîte de vitesses recevant cet ensemble ; et
- la figure 4 est une vue détaillée du pignon fixe supportant la butée d'arrêt.

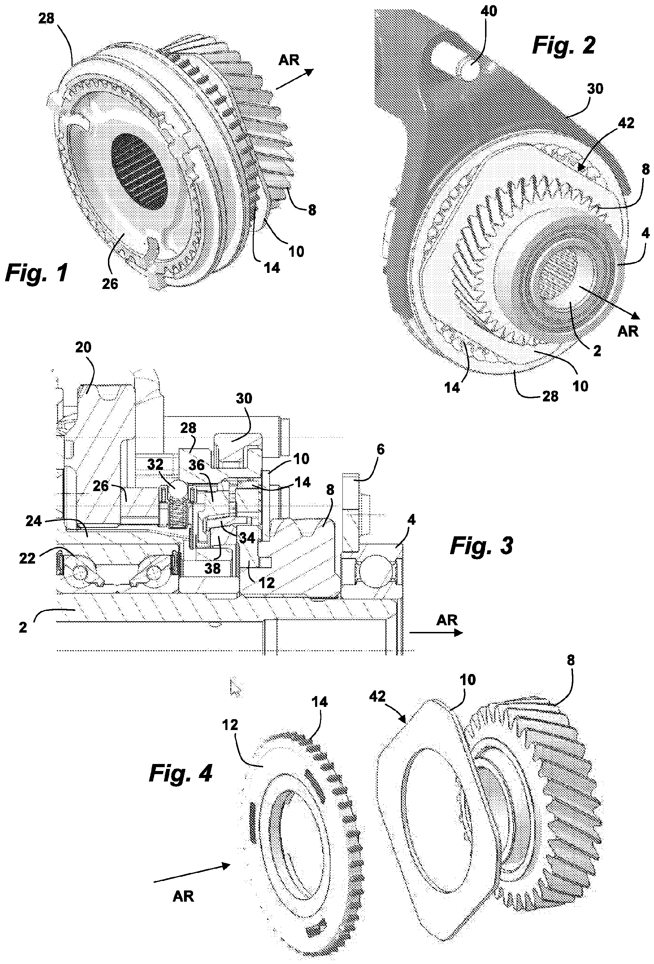

Les figures 1 à 4 présentent un arbre de boîte de vitesses 2 comportant du côté axial appelé par convention côté arrière indiqué par la flèche « AR », une extrémité supportée par un roulement 4 centré dans un carter de la boîte de vitesses, et serré axialement sur ce carter par une plaque 6.

L'arbre 2 supporte en avant du roulement 4, un pignon fixe 8 disposant sur le côté avant de sa denture, d'une plaque d'arrêt découpée en tôle 10 disposée transversalement, qui comporte un perçage centré sur un premier épaulement de ce pignon.

Le pignon fixe 8 comporte en avant de la plaque d'arrêt 10, un deuxième épaulement de diamètre inférieur recevant une couronne de synchronisation 12 comportant des cannelures extérieures 14, qui est fixée sur ce pignon de manière à transmettre un couple.

Un pignon libre 20 solidaire d'un moyeu 24 guidé en rotation par un roulement 22 disposé sur l'arbre 2, comporte du côté arrière un épaulement 26 présentant sur son pourtour des cannelures qui s'ajustent dans des cannelures correspondantes réalisées dans un alésage d'un manchon coulissant 28.

Le manchon 28 comporte une rainure circulaire extérieure recevant les deux doigts d'appui diamétralement opposés d'une fourchette de commande 30, qui est guidée axialement par un axe 40.

L'épaulement 26 du pignon libre 20 comporte des perçages radiaux recevant chacun une bille de verrouillage 32 poussée vers l'extérieur par un ressort, ces billes s'ajustant sur des formes coniques intérieures du manchon de synchronisation 28 afin de confirmer ses positions axiales rapport dégagé vers l'avant, et rapport engagé vers l'arrière.

Le dispositif de synchronisation intégré à l'intérieur du manchon 28, comporte une bague extérieure 36 disposant sur son contour extérieur de cannelures engagées dans les cannelures intérieures de ce manchon. La bague extérieure 36 comporte une face de frottement conique intérieure venant en appui sur une bague conique intermédiaire 34 liée en rotation à la couronne 12, cette bague conique venant à son tour en appui sur une bague intérieure 38 liée en rotation à la première bague extérieure.

On réalise ainsi un dispositif de synchronisation mettant en oeuvre deux frottements, quand le manchon 28 se déplace vers l'arrière en appliquant une poussée axiale sur la bague extérieure 36.

Arrivé vers l'arrière en fin de course d'engagement du rapport, le manchon 28 vient appuyer sur la plaque d'arrêt 10 formant une butée de fin de course, et peut rester en appui sur cette plaque qui tourne à la même vitesse.

Le contour extérieur de la plaque d'arrêt 10 forme globalement un carré disposant d'angles arrondis qui s'inscrivent dans un cercle centré sur l'axe, comportant un rayon supérieur à celui de l'alésage du manchon 28 pour former dans ces angles quatre points d'appui recevant la face latérale de ce manchon.

Le point milieu des côtés de ce carré est disposé sur un rayon un peu inférieur à l'alésage du manchon 28, de manière à laisser quatre échancrures 42 formant des passages permettant l'entrée d'huile latéralement dans le dispositif de synchronisation, quand ce manchon est en appui sur la plaque d'arrêt 10.

On obtient ainsi dès la mise en rotation des arbres de la boîte de vitesses, entraînant une certaine projection d'huile à l'intérieur des carters, la possibilité de laisser entrer cette huile par les quatre échancrures 42. On a cette lubrification sans attendre que le creux axial de l'arbre 2 soit rempli de l'huile provenant d'une goulotte de récupération, ce qui peut être assez long en particulier par temps froid où huile est plus épaisse.

D'une manière générale on peut réaliser toute forme d'échancrure 42 sur le contour extérieur de la plaque d'arrêt 10, et suivant un nombre quelconque. Les échancrures 42 peuvent avoir toute forme descendant en dessous du rayon de l'alésage du manchon 28, elles peuvent former en variante un creux en arc de cercle.

Avantageusement, de manière économique la plaque d'arrêt 10 avec ses échancrures 42 est formée directement par la découpe et l'emboutissage d'une tôle, réalisées dans une succession d'opérations par une presse comportant un outil à suivre.

En complément la forme carrée de la plaque d'arrêt 10 présentée ci-dessus, a pour avantage de permettre une optimisation de la disposition de ces plaques dans une bande de tôles à découper en réduisant les chutes lors de cette découpe. De plus cette forme permet aussi d'optimiser le stockage dans des bacs après leur production, en réduisant le volume occupé.

Par ailleurs la masse de la plaque d'arrêt 10 est réduite grâce au minimum de matière nécessaire sur un grand rayon pour former la butée du manchon 28, avec les grandes échancrures 42 intermédiaires, ce qui allège la boîte de vitesses.

On notera aussi que l'appui de la plaque d'arrêt 10 maintenu sur la face latérale du manchon 28, et non pas sur l'extrémité des cannelures intérieures de ce manchon, facilite la conception de la boîte de vitesses car cette face comporte une tolérance plus facile à maîtriser que celle des extrémités de ces cannelures.

## Revendications

1. - Ensemble comportant un manchon de synchronisation (28) équipé d'une butée d'arrêt (10) pour une boîte de vitesses, ce manchon comprenant un alésage présentant des cannelures prévues pour lier un pignon libre (20) à son arbre (2), en actionnant un dispositif de synchronisation (34, 36, 38) contenu radialement à l'intérieur de cet alésage, la butée d'arrêt maintenue axialement présentant une face plane transversale disposant d'un contour extérieur dépassant de l'alésage afin de recevoir l'appui de la face transversale du manchon (28) pour l'arrêter en fin de course, **caractérisé en ce que** le contour extérieur de la butée d'arrêt (10) comporte des échancrures (42) qui viennent radialement en dessous de l'alésage.

2. - Ensemble pour boîte de vitesses selon la revendication 1, **caractérisé en ce que** le contour extérieur de la butée d'arrêt (10) s'inscrit dans un cercle.

3. - Ensemble pour boîte de vitesses selon la revendication 1 ou 2, **caractérisé en ce que** les échancrures (42) sont formées par des découpes droites.

4. - Ensemble pour boîte de vitesses selon les revendications 2 et 3, **caractérisé en ce que** le contour extérieur de la butée d'arrêt (10) forme un carré disposant de quatre angles arrondis inscrits dans le cercle.

5. - Ensemble pour boîte de vitesses selon l'une quelconque des revendications précédentes, **caractérisé en ce que** la butée d'arrêt (10) est formée dans une tôle.

6. - Procédé de réalisation d'une butée d'arrêt (10) pour un ensemble selon la revendication 5, **caractérisé en ce qu'**il comporte la découpe et l'emboutissage d'une bande de tôle sur une presse pour former la butée d'arrêt (10).

7. - Boîte de vitesses disposant de pignons libres (20) pouvant être liés à leurs arbres (2) par le coulissement de manchons de synchronisation (28), **caractérisée en ce qu'**elle comporte un ensemble réalisé selon l'une quelconque des revendications 1 à 5.

8. - Boîte de vitesses selon la revendication 7, **caractérisée** en ce la butée d'arrêt (10) est liée à un pignon fixe (8) de la boîte de vitesses.

9. - Véhicule automobile comportant une boîte de vitesses reliée à un moteur thermique pour entraîner les roues motrices, **caractérisé en ce que** cette boîte de vitesses comporte un ensemble réalisé selon l'une quelconque des revendications 1 à 5.

## Patentansprüche

1. Einheit, die eine Synchronisationsmuffe (28) umfasst, die mit einem Anschlag (10) versehen ist, für ein Schaltgetriebe, wobei diese Muffe eine Bohrung umfasst, die Nuten aufweist, die vorgesehen sind, um ein freies Ritzel (20) mit seiner Welle (2) zu verbinden, indem eine Synchronisationsvorrichtung (34, 36, 38) betätigt wird, die radial im Inneren dieser Bohrung enthalten ist, wobei der axial gehaltene Anschlag eine flache Querfläche aufweist, die über eine Außenkontur verfügt, die über die Bohrung hinaussteht, um die Auflage der Querfläche der Muffe (28) zu empfangen, um sie am Hubende zu stoppen, **dadurch gekennzeichnet, dass** die Außenkontur des Anschlags (10) Ausschnitte (42) umfasst, die radial unter die Bohrung kommen.

2. Einheit für Schaltgetriebe nach Anspruch 1, **dadurch gekennzeichnet, dass** die Außenkontur des Anschlags (10) in einen Kreis fällt.

3. Einheit für Schaltgetriebe nach Anspruch 1 oder 2, **dadurch gekennzeichnet, dass** die Ausschnitte (42) aus geraden Schnitten gebildet sind.

4. Einheit für Schaltgetriebe nach den Ansprüchen 2 und 3, **dadurch gekennzeichnet, dass** die Außenkontur des Anschlags (10) ein Quadrat bildet, das über 4 gerundete Winkel, die in den Kreis fallen, verfügt.

5. Einheit für Schaltgetriebe nach einem der vorhergehenden Ansprüche, **dadurch gekennzeichnet, dass** der Anschlag (10) in einem Blech gebildet ist.

6. Verfahren zum Herstellen eines Anschlags (10) für eine Einheit nach Anspruch 5, **dadurch gekennzeichnet, dass** es das Ausschneiden und Stanzen eines Blechbands auf einer Presse zum Bilden des Anschlags (10) umfasst.

7. Schaltgetriebe, das über freie Ritzel (20) verfügt, die mit seinen Wellen (2) durch das Gleiten von Synchronisationsmuffen (28) verbunden werden können, **dadurch gekennzeichnet, dass** es eine Einheit umfasst, die nach einem der Ansprüche 1 bis 5 gefertigt ist.

8. Schaltgetriebe nach Anspruch 7, **dadurch gekennzeichnet, dass** der Anschlag (10) mit einem stationären Ritzel (8) des Schaltgetriebes verbunden ist.

9. Kraftfahrzeug, das ein Schaltgetriebe umfasst, das mit einer Brennkraftmaschine verbunden ist, um die Antriebsräder anzutreiben, **dadurch gekennzeichnet, dass** dieses Schaltgetriebe eine Einheit nach einem der Ansprüche 1 bis 5 umfasst.

## Claims

1. An assembly comprising a synchronisation sleeve (28) for a gearbox, provided with a stop (10), said sleeve including a bore having splines provided to link an idler gear (20) to the shaft (2) of same, activating a synchronisation device (34, 36, 38) contained radially inside said bore, the stop, held axially, having a planar transverse face provided with an external contour projecting beyond the bore in order to abut against the transverse face of the sleeve (28) to stop same at the end of travel, **characterized in that** the external contour of the stop (10) comprises indentations (42) that are radially underneath the bore.

2. The assembly for a gearbox according to Claim 1, **characterized in that** the external contour of the stop (10) is inscribed in a circle.

3. The assembly for a gearbox according to Claim 1 or 2, **characterized in that** the indentations (42) are formed by straight cuts.

4. The assembly for a gearbox according to Claims 2 and 3, **characterized in that** the external contour of the stop (10) forms a square having four rounded angles inscribed in the circle.

5. The assembly for a gearbox according to any one of the preceding claims, **characterized in that** the stop (10) is formed in a metal sheet.

6. A method for producing a stop (10) for an assembly according to Claim 5, **characterized in that** it comprises the cutting and stamping of a strip of sheet metal on a press to form the stop (10).

7. A gearbox having idler gears (20) being able to be linked to their shafts (2) by the sliding of synchronisation sleeves (28), **characterized in that** it comprises an assembly realized according to any one of Claims 1 to 5.

8. The gearbox according to Claim 7, **characterized in that** the stop (10) is linked to a fixed gear (8) of the gearbox.

9. A motor vehicle comprising a gearbox connected to a heat engine to drive the drive wheels, **characterized in that** this gearbox comprises an assembly realized according to any one of Claims 1 to 5.
